# EUROPÄISCHE PATENTSCHRIFT

(11) **EP 2 619 539 B1**
(45) Veröffentlichungstag und Bekanntmachung des Hinweises auf die Patenterteilung: **17.12.2014**
(21) Anmeldenummer: 11767181.8
(22) Anmeldetag: 29.07.2011
(51) Int. Cl.: G01N 27/407, G01N 1/22, F01N 13/00

(54) **SENSORANORDNUNG**
SENSOR ARRANGEMENT
AGENCEMENT CAPTEUR

(30) Priorität: 22.09.2010 DE 102010041166
(43) Veröffentlichungstag der Anmeldung: 31.07.2013
(73) Patentinhaber: Robert Bosch GmbH, 70442 Stuttgart (DE)
(72) Erfinder: FIX, Richard, 70839 Gerlingen (DE); KUNZ, Denis, 74199 Untergruppenbach (DE); MARTIN, Alexander, 93053 Regensburg (DE)
(86) Internationale Anmeldenummer: PCT/EP2011/063076
(87) Internationale Veröffentlichungsnummer: WO 2012/038128

(56) Entgegenhaltungen:
- DE-A1- 3 722 369
- DE-A1- 19 810 973
- US-A- 6 155 896
- US-A1- 2005 160 840
- US-A1- 2008 236 246

## Beschreibung

Die vorliegende Erfindung betrifft eine Sensoranordnung. Die vorliegende Erfindung betrifft insbesondere eine Sensoranordnung für einen Sensor zum Detektieren von Gasemissionen in dem Abgas eines Kraftfahrzeugs.

### Stand der Technik

Zur Reduktion von Schadgasemissionen, insbesondere von Verbrennungsmotoren in Kraftfahrzeugen, müssen die schadhaften Gase in kleinsten Konzentrationen sicher durch einen Sensor nachgewiesen werden. Beispielhaft nachzuweisende Gase beziehungsweise Schadgasemissionen umfassen Stickstoffmonoxid (NO), Stickstoffdioxid (NO₂), Kohlenwasserstoffe (HCs) oder Ammoniak (NH₃). Bei einer Analyse des Abgases eines Kraftfahrzeugs beziehungsweise der in dem Abgas vorhandenen Emissionen ist dabei eine Messung in dem Abgasstrang des Kraftfahrzeugs notwendig. Die hier eingesetzten Sensoren müssen daher unter korrosiven Gasumgebungen und insbesondere bei hohen Abgastemperaturen, wie etwa bis zu 650°C, zuverlässig arbeiten, was hohe Anforderungen an den einzusetzenden Sensor stellt.

Um den hohen Temperaturen standzuhalten, werden z.B. Abgassensoren verwendet, die auf ionenleitenden Keramikmaterialien basieren. Beispielsweise werden Keramiksensoren auf Basis von Zirkondioxid (ZrO₂) verwendet. Aufgrund der zur Detektion von Gasen notwendigen Ionenleitung werden derartige Sensoren dauerhaft bei Temperaturen betrieben, die 750°C überschreiten müssen.

Aus DE 198 10 973 A1 ist ein Verfahren bekannt, um einen Drift, also eine Nullpunktsveränderung, eines Abgassensors zu kompensieren und ferner auch bei entsprechend hohen Abgastemperaturen Arbeitstemperaturbereich des Sensors einzuhalten. Bei einem derartigen Verfahren wird der Abgassensor periodisch wechselnd von Abgas und Frischluft umspült. Dadurch wird dem Abgassensor durch die Frischluft ein Bezugspunkt als Nullpunkt gegeben, wodurch eine stetige Korrektur beziehungsweise eine Kalibrierung des Nullpunkts möglich wird. Darüber hinaus kann der Abgassensor durch die vergleichsweise kühle Frischluft gekühlt werden und kann so entsprechend der Temperaturdifferenz in seinem Arbeitstemperaturbereich gehalten werden.

In DE 10 2007 012 056 A1 ist ein System und Verfahren zum Verbessern der Leistung eines Fluidsensors für einen Verbrennungsmotor beschrieben, bei dem ein repräsentativer Querschnitt eines Abgases, das durch eine Abgasleitung strömt, analysierbar ist. Dazu wird das Abgas passiv umgeleitet von einem Zielbereich eines Fluidstroms hin zu einem entsprechenden Sensor, der beispielsweise in einer Abschirmung angeordnet sein kann. Dieses passive Umleiten kann eine passive Kühlung des Abgases vor Erreichen des Sensors zur Folge haben.

In dem Dokument US 2005/0160840 A1 ist ein Abgassystem beschrieben, bei dem der Sauerstoffgehalt ermittelt werden soll. Dabei kann das Abgas in eine von dem Abgasstrom getrennte Messkammer geleitet werden, in welcher ein Sensor angeordnet ist. Weiterhin können Kühlrippen zur Kühlung einer Abgasleitung vorgesehen sein.

Das Dokument US 2008/0236246 A1 betrifft Gassensoren insbesondere zur Verwendung in Hochtemperaturanwendungen. Dabei kann ein Sensor in einem zu dem Hauptpfad parallelen Gaspfad angeordnet sein, welcher von dem Hauptpfad beabstandet ist. Ferner können Kühlrippen vorgesehen sein, um das zu vermessende Gas zu kühlen.

Aus dem Dokument DE 198 10 973 A1 ist ein Verfahren zur Nullpunktkalibierung eines Abgassensors bekannt. Bei einem derartigen Verfahren wird der Abgassensor periodisch wechselnd von Abgas und von Frischluft umspült Hierdurch soll dem Abgassensor ein Bezugssystem vorgegeben werden, um einen Nullpunkt anzugeben. Dabei wird der gemessene Nullpunkt bei einer Frischluft-Phase durch einen Vergleich mit einem vorgegebenen Wert auskorrigiert. Dabei kann der Wechsel von Abgas und Frischluft durch eine steuerbare Ventileinrichtung bewirkt werden.

### Offenbarung der Erfindung

Gegenstand der vorliegenden Erfindung ist eine Sensoranordnung, insbesondere zum Detektieren von Gasemissionen in dem Abgas eines Kraftfahrzeugs mit einem Verbrennungsmotor, umfassend eine Gasleitung und eine durch ein Gehäuse begrenzte und mit dem Inneren der Gasleitung durch einen Eingang und einen Ausgang fluidisch verbundene Analysekammer, wobei die Analysekammer zumindest teilweise außerhalb der Gasleitung angeordnet ist und wobei in der Analysekammer ein Sensor angeordnet ist derart, dass er sich außerhalb der Gasleitung befindet. Dabei ist wenigstens ein Kühlelement vorgesehen, das in einem Bereich zwischen der Gasleitung und dem Sensor angeordnet ist, wobei zumindest der Eingang durch eine Verschlusseinrichtung verschließbar ist, und wobei die Verschlusseinrichtung mit einer Steuereinrichtung verbunden ist, die durch die Verschlusseinrichtung bei einer vorbestimmten Temperatur des Gasstroms den Eingang schließt oder öffnet. Durch die erfindungsgemäße Sensoranordnung kann die Arbeitstemperatur des Sensors wirksam verringert werden. Die Betriebstemperatur des Sensors wird insbesondere unter die tatsächliche Abgastemperatur gesenkt, beziehungsweise der Sensor kann unter der tatsächlichen Abgastemperatur betrieben werden. Dadurch kann die Langzeitstabilität und Zuverlässigkeit des Sensors deutlich verbessert und ferner können aufwändige Kühlprozesse vermieden werden.

Die Anforderungen an die Materialstabilität und die Belastungen sowohl des Sensors als auch sämtlicher zusätzlicher Sensorkomponenten können so deutlich verringert werden, was die Herstellung und Entwicklung von Sensoren für eine erfindungsgemäße Sensoranordnung kostensparend gestaltet. Zusätzlich kann die gesamte Aufbau- und Verbindungstechnik des Sensors für niedrige Temperaturen ausgelegt werden, wodurch eine weitere Kostenersparnis möglich ist.

Dadurch, dass die Analysekammer zumindest teilweise außerhalb der Gasleitung angeordnet ist und in der Analysekammer ein Sensor angeordnet ist derart, dass er sich außerhalb der Gasleitung befindet, wird das Abgas aus dem Inneren der Gasleitung und in einen Bereich geleitet, der sich außerhalb der Gasleitung befindet. Dadurch ist das Gehäuse, das die Analysekammer begrenzt, nicht oder zumindest nur zu einem insbesondere geringen Teil dem permanenten heißen Gasstrom ausgesetzt. Dadurch wird bereits ein Teil der thermischen Energie des zu vermessenden Gases abgeleitet und das Gas somit abgekühlt.

Durch das Vorsehen wenigstens eines Kühlelements, das in einem Bereich zwischen der Gasleitung und der Analysekammer angeordnet ist, wird der Kühleffekt ferner deutlich verstärkt. Die thermische Energie wird so nicht nur durch das Anordnen des Sensors außerhalb des heißen Abgasstroms realisiert, sondern vielmehr durch das Kühlelement weiter verstärkt. Aufgrund des großen Temperaturgradienten zwischen dem Gehäuse beziehungsweise dem wenigstens einen Kühlelement und der Umgebungsluft wird die vom Abgas aufgenommene Wärme dabei nach außen abgeführt. Durch die Ausbildung und Anordnung des Kühlelements oder der Kühlelemente kann auf den Kühleffekt ferner wie gewünscht Einfluss genommen werden. So ist es möglich, eine Kühlrate einzustellen, mit der die Betriebstemperatur des Sensors wie gewünscht einstellbar ist. So ist beispielsweise für Keramiksensoren eine hohe Betriebstemperatur erwünscht und erforderlich, wohingegen bei anderen Sensoren eine derart hohe Betriebstemperatur oftmals gerade zu vermeiden ist.

Der Bereich zwischen der Gasleitung und dem Sensor ist daher ein Bereich, an dem das zu analysierende Gas auf seinem Weg von der Gasleitung zu dem Sensor entlangströmt. Das Kühlelement kann somit beispielsweise an dem Eingang, in der Analysekammer oder besonders bevorzugt zwischen dem Eingang und der Analysekammer angeordnet sein. Auf diese Weise kühlt sich das zu analysierende Gas wenigstens bis auf die Betriebstemperatur des Sensors ab, bevor es diesen erreicht.

Darüber hinaus kann der Einbauort des Sensors flexibler gewählt werden, denn die vorgelagerte Abgaskühlung ermöglicht den Betrieb des Sensors an Positionen, die näher an dem Verbrennungsmotor und damit in heißeren Abgasbereichen des Abgasstrangs liegen.

Ferner ist zumindest der Eingang durch eine Verschlusseinrichtung verschließbar. Beispielsweise kann diese Verschlusseinrichtung als Klappe ausgebildet sein. Dadurch kann ein Durchströmen des Gases durch die Analysekammer zumindest zeitweise verhindert werden. Temperaturspitzen, die insbesondere bei einer Regenerierung von in dem Abgasstrang eines Fahrzeugs angeordneten Partikelsensoren in einem Bereich von bis zu 1000°C liegen können, wirken somit nicht auf den Sensor. Die Verschlusseinrichtung kann dabei einen Bimetallstreifen umfassen, der bei einer vorgegebenen Temperatur den Eingang verschließt.

Dabei ist vorgesehen, dass die Verschlusseinrichtung mit einer Steuereinrichtung verbunden ist, die die Verschlusseinrichtung in Abhängigkeit der Temperatur des Gasstroms schließt beziehungsweise öffnet. Insbesondere kann bei einer vorbestimmten Temperatur der Eingang verschlossen oder geöffnet werden, so dass der Sensor vor ungewollten Temperaturspitzen besonders sicher geschützt wird. Dabei wird insbesondere durch eine Temperaturmesseinrichtung die Temperatur des Gasstroms gemessen und somit in Abhängigkeit der tatsächlichen in der

Gasleitung herrschenden Bedingungen reagiert. Durch ein zusätzliches Schließen beziehungsweise Öffnen des Eingangs in Abhängigkeit eines Regenerierungsvorgangs kann die Verschlusseinrichtung beispielsweise vor Einleiten einer Temperaturerhöhung geschlossen werden und nach der Regenerierung wieder geöffnet werden.

Im Rahmen einer vorteilhaften Ausgestaltung der vorliegenden Erfindung sind eine Mehrzahl von Kühlelementen vorgesehen, die als Kühlrippen ausgestaltet sind. Diese sind dann vorzugsweise quer zu der Fließrichtung des Gases angeordnet und können kammartig ineinander greifen. Dadurch wird eine große Oberfläche der Kühlelemente geschaffen, an der das zu analysierende Gas entlangströmt, bevor es den Sensor erreicht. Dadurch wird ein sehr effektives Kühlverhalten realisiert. Dabei können die Kühlrippen beispielsweise wärmeableitend gestaltet sein derart, dass sie aus einem Material mit einer hohen Wärmeleitfähigkeit ausgebildet sind. Geeignete Werte der Wärmeleitfähigkeit betragen ≥ 10 W/mK bis ≤ 5000W/mK, vorteilhafterweise ≥ 50W/mK.

Im Rahmen einer weiteren vorteilhaften Ausgestaltung der vorliegenden Erfindung ist das wenigstens eine Kühlelement als thermische Masse ausgebildet. Dieses ist dann zweckmäßigerweise zwischen dem Eingang und der Analysekammer derart angeordnet, dass das zu analysierende Gas an dieser entlangströmt. Eine thermische Masse ist dabei ein Bauteil, welches eine große Wärmekapazität, insbesondere in einem Bereich von ≥ 0,3J/gK bis ≤ 1,5J/gK, vorteilhafterweise ≥ 0,5J/gK aufweist. Dadurch wird die thermische Energie des zu analysierenden Gases im Wesentlichen von der thermischen Masse abgefangen und das Gas so gekühlt. Vorzugsweise kann das Kühlelement, wie insbesondere die thermische Masse, dabei derart ausgestaltet sein, dass es seine thermische Energie weiter nach außen ableiten kann. Dies kann vorteilhafterweise etwa durch eine Wärmeableitung realisiert werden, wobei als Wärmeableitung beispielsweise ein Material mit einer hohen Wärmeleitfähigkeit verwendet werden kann. Grundsätzlich ist jedoch jede Art der Wärmeabführung, also Wärmeleitung (Konduktion), Wärmestrahlung (Emission) und Wärmemitführung (Konvektion) möglich.

Vorzugsweise ist in dem wenigstens einen Kühlelement wenigstens ein Kühlkanal für eine externe Kühlung des Kühlelements mit einem Kühlfluid vorgesehen. Dadurch kann das Kühlelement seine Kühlwirkung nicht nur durch seine wärmeaufnehmenden beziehungsweise wärmeabführenden Eigenschaften entfalten, sondern die Kühlwirkung kann vielmehr durch eine externe Kühlung verstärkt werden. Die Temperatur des Gases kann so auch bei Temperaturspitzen auf eine gewünschte Temperatur sicher herabgekühlt werden. Das Kühlfluid kann dabei etwa durch Wasser oder ein Öl gebildet sein.

Im Rahmen einer weiteren vorteilhaften Ausgestaltung der vorliegenden Erfindung sind das Gehäuse und die Gasleitung zumindest teilweise thermisch von einander entkoppelt. Auf diese Weise kann verhindert werden, dass das Gehäuse von der Gasleitung in einem zu starken Maße erhitzt wird und so Hitze auf das eingeleitete Gas abstrahlt, was ein Abkühlen des Abgases erschweren würde. Durch die vorzugsweise vollständige thermische Entkopplung von Gehäuse und Gasleitung kann das Gas somit noch effektiver abgekühlt werden. Eine thermische Entkopplung kann beispielsweise realisiert werden, indem das Gehäuse nicht in direktem Kontakt mit der Gasleitung steht, sondern zwischen dem Gehäuse und der Gasleitung eine thermisch isolierende Komponente angeordnet ist. Dies kann demzufolge ein Material mit einer geringen Wärmeleitfähigkeit sein. Beispielhafte Materialien, die für die Ausbildung einer thermischen Entkopplung von Gehäuse und Gasleitung verwendbar sind, umfassen Stahllegierungen mit Wärmeleitfähigkeiten ≤ 4W/mK, beispielsweise ein Chrom-Molybden-Vanadium legierter Stahl, wie etwa Assab Steels Calmax. Ferner sind Keramiken geeignet, die geringe Wärmeleitfähigkeiten von vorzugsweise ≤ 4W/mK und gleichzeitig hohem Wärmeausdehnungskoeffizienten aufweisen, und wobei der Wärmeausdehnungskoeffizient zweckmäßigerweise an den Wärmeausdehnungskoeffizienten der Gasleitung angepasst ist. Als bevorzugtes Beispiel ist Zirkoniumdioxid (ZrO₂) verwendbar.

Im Rahmen einer weiteren vorteilhaften Ausgestaltung der vorliegenden Erfindung ist der Sensor als chemosensitiver Feldeffekttransistor (ChemFET) ausgebildet. Ein derartiger Feldeffekttransistor weist insbesondere ein pleitendes Substrat auf, in das zwei n-leitende Bereiche eingebracht sind, die als Source beziehungsweise Drain bezeichnet werden. Zwischen Source und Drain befindet sich eine elektrisch isolierende Schicht, auf der eine als Gate bezeichnete Elektrode angeordnet ist. Bei einem chemosensitiven Feldeffekttransistor ist auf dem Gate eine Substanz angeordnet, die für die nachzuweisende Komponente eine Selektivität aufweist, oder das Gate selbst weist eine derartige Selektivität auf. Durch eine Veränderung des Gate-Potentials durch eine angelagerte beziehungsweise adsorbierte Komponente wird der Feldeffekttransistor somit für die nachzuweisende Komponente selektiv.

Ein derartiger Halbleitersensor ist für die Messung von Schadgasemissionen grundsätzlich gut geeignet und weist dabei eine sehr gute Messgenauigkeit auf, die bis in den ppm-Bereich geht. Insbesondere bei der Verwendung von robusten Halbleitermaterialien mit großer Bandlücke, wie etwa Siliciumcarbid (SiC) oder Galliumnitrid (GaN) können chemosensitive Feldeffekttransistoren auch bei höheren Temperaturen und zur Messung heißer Gase in korrosiven Umgebungen, wie etwa Verbrennungsabgas, eingesetzt werden. Jedoch sind die erfindungsgemäß herrschenden niedrigen Temperaturen auch für die Lebensdauer derartige Feldeffekttransistoren von Vorteil, da insbesondere die Sensorkomponenten, wie etwa Gateisolationsschichten, Ohmkontakte, Leiterbahnen oder die Aufbau- und Verbindungstechnik weniger aufwändig gestaltet werden können.

Neben der hohen Messgenauigkeit, also der niedrigen Nachweisgrenzen, weisen derartige Sensoren daher den weiteren Vorteil auf, dass sie sehr kostengünstig herstellbar sind und die erfindungsgemäße Sensoranordnung so sehr kostengünstig gestalten.

Typische Betriebstemperaturen eines chemosensitiven Feldeffekttransistors liegen in einem Bereich von ≥ 100°C bis ≤ 600°C, insbesondere in einem Bereich von ≥ 200°C bis ≤ 500°C Durch das Vorsehen einer erfindungsgemaßen Anordnung kann diese Temperatur auch bei deutlich höheren Abgastemperaturen problemlos eingehalten werden.

Es ist weiter vorteilhaft, dass eine katalytisch aktive Substanz vorgesehen ist, die derart angeordnet ist, dass das Gas sie vor dem Erreichen des Sensors durchströmt und/oder an ihr entlangströmt. Dadurch kann die Zusammensetzung des Abgases innerhalb der Analysekammer gezielt verändert werden. Beispielsweise kann ein Oxidationskatalysator vorgesehen sein. Mit Hilfe des Katalysators können Abgasbestandteile, die nicht detektiert werden sollen oder eine Detektion stören können, aus dem zu vermessenden Gas entfernt werden.

Insbesondere ist die erfindungsgemäße Sensoranordnung in dem Abgasstrang eines Fahrzeugs mit einem Verbrennungsmotor angeordnet. Die erfindungsgemäße Sensoranordnung ist für die Analyse von Gasemissionen eines derartigen Kraftfahrzeugs besonders gut geeignet.

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
Fig. 1 eine schematische Schnittansicht einer Ausführungsform der erfindungsgemäßen Sensoranordnung von der Seite;
Fig. 2 eine schematische Schnittansicht einer weiteren Ausführungsform der erfindungsgemäßen Sensoranordnung von der Seite;
Fig. 3 eine schematische Schnittansicht einer weiteren Ausführungsform der erfindungsgemäßen Sensoranordnung von der Seite;
Fig. 4 eine schematische Schnittansicht einer weiteren Ausführungsform der erfindungsgemäßen Sensoranordnung von der Seite;
Fig. 5 eine schematische Schnittansicht einer weiteren Ausführungsform der erfindungsgemäßen Sensoranordnung von der Seite;
Fig. 6 eine schematische Schnittansicht einer weiteren Ausführungsform der erfindungsgemäßen Sensoranordnung von der Seite;
Fig. 7 eine schematische Schnittansicht einer weiteren Ausführungsform der erfindungsgemäßen Sensoranordnung von der Seite.

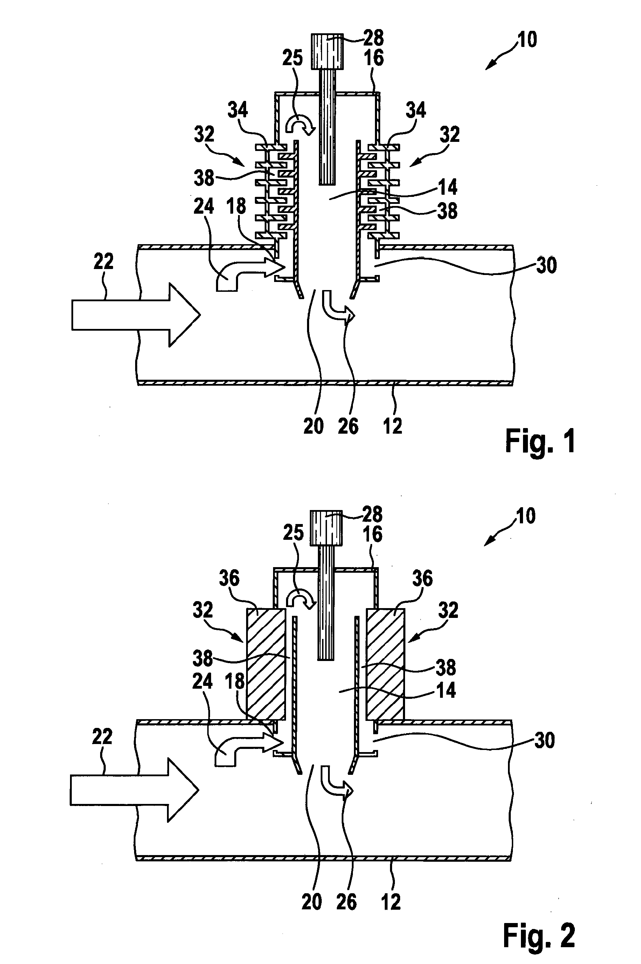

In Figur 1 ist eine erfindungsgemäße Sensoranordnung 10 dargestellt. Die Sensoranordnung 10 ist insbesondere zum Detektieren von Gasemissionen in dem Abgas eines Kraftfahrzeugs mit einem Verbrennungsmotor geeignet. Die Sensoranordnung 10 ist daher insbesondere in dem Abgasstrang eines Kraftfahrzeugs mit einem Verbrennungsmotor angeordnet. Gleichermaßen kann etwa bei einer Ölheizung. Im Folgenden wird jedoch in nicht beschränkender Weise auf einen Einsatz in dem Abgasstrang eines Fahrzeugs Bezug genommen.

Die Sensoranordnung 10 umfasst eine Gasleitung 12, in der insbesondere das Abgas des Verbrennungsmotors als zu analysierendes Gas geführt wird. Die Gasleitung 12 kann daher als Abgasrohr Teil eines Abgasstrangs eines Kraftfahrzeugs sein.

Die Sensoranordnung 10 weist ferner eine Analysekammer 14 zum Analysieren des Abgases auf, die durch ein Gehäuse 16 begrenzt wird und zumindest teilweise außerhalb der Gasleitung 12 angeordnet ist. Die Analysekammer 14 ist dabei zweckmäßigerweise mit dem Inneren der Gasleitung 12 durch einen Eingang 18 und einen Ausgang 20 fluidisch verbunden. Der Eingang 18 und der Ausgang 20 sind beispielsweise als eine in dem Gehäuse 16 angeordnete Öffnung ausgebildet und in dem Gasstrom, der durch den Pfeil 22 angedeutet wird, angeordnet. Auf diese Weise kann zumindest ein Teil des Gasstroms in das Gehäuse 16 und damit in die Analysekammer 14 hinein- und herausströmen, wie dies durch die Pfeile 24, 25 und 26 angedeutet ist.

Für eine Analyse des Abgases, das in der Gasleitung 12 geführt wird, ist in der Analysekammer 14 ein Sensor 28 angeordnet. Der Sensor 28 ist vorzugsweise in das Gehäuse 16 einbringbar und dichtet das Gehäuse 16 dabei gasdicht ab. Beispielsweise kann das Gehäuse 16 wie auch der Sensor 28 mit einem Gewinde versehen sein, so dass der Sensor 28 in das Gehäuse 16 schraubbar ist. Dabei kann der Sensor 28 stabförmig ausgebildet sein und so in die Analysekammer 14 hineinragen. Der Sensor 28 ist dabei derart angeordnet, dass er sich außerhalb der Gasleitung 12 befindet.

Vorzugsweise ist der Sensor 28 als chemosensitiver Feldeffekttransistor (ChemFET) ausgebildet und als solcher selektiv für die zu analysierenden Substanzen in dem Abgas. Die zu analysierenden Substanzen sind insbesondere die in dem Abgas eines Fahrzeugs mit Verbrennungsmotor auftretenden Gase und können beispielsweise Stickstoffmonoxid (NO), Stickstoffdioxid (NO₂), Kohlenwasserstoffe (HCs) oder Ammoniak (NH₃) umfassen. Daher werden als selektive Komponenten auf der Gate-Elektrode vorzugsweise Platin-, Palladium-, Gold-, Silber- und/oder Iridium-haltige Materialien bzw. Materialkombinationen verwendet.

Das Abgas strömt somit von der Gasleitung 12 durch den Eingang 18 in das Gehäuse 16 und damit in die Analysekammer 14, wo es mit dem Sensor 28 in Kontakt kommt und auf diese Weise analysiert werden kann. Somit strömt das Gas, bevor es den Sensor 28 erreicht, aus der Gasleitung 12 und damit aus dem heißen Abgasstrom in die Analysekammer 14 und kühlt sich dadurch bereits ab.

Um das Abkühlen jedoch noch effektiver zu gestalten und die Temperatur des zu vermessenden Gases weiter zu senken, ist wenigstens ein Kühlelement 32 vorgesehen, das zwischen der Gasleitung 12 und dem Sensor 28 angeordnet ist. Auf diese Weise passiert das zu analysierende Gas das wenigstens ein Kühlelement 32 vor dem Auftreffen auf den Sensor 28 und kann so einen weiteren Teil seiner thermischen Energie an das Kühlelement 32 abgeben und sich so abkühlen.

Um die Kühlwirkung zu vergrößern und insbesondere Temperaturspitzen sicher abfangen zu können, kann in dem Kühlelement 32 wenigstens ein Kühlkanal für eine externe Kühlung des Kühlelements 32 mit einem Kühlfluid vorgesehen sein. Auf diese Weise kann das Kühlfluid das Kühlelement 32 durchströmen und so thermische Energie abführen. Geeignete Kühlfluide weisen naturgemäß eine große Wärmekapazität auf und können Wasser oder Öl umfassen.

Gemäß Figur 1 umfasst die erfindungsgemäße Anordnung 10 eine Mehrzahl von Kühlelementen 32, die als Kühlrippen 34 ausgestaltet sind und in einem Eingangskanal 38 angeordnet sein können, der zwischen dem Eingang 18 und der Analysekammer 14 angeordnet ist. Die Kühlrippen 34 können vorzugsweise quer zur Fließrichtung des Gases angeordnet sein und kammartig ineinander greifen. So wird sichergestellt, dass das Gas an einer möglichst großen Oberfläche der Kühlrippen 34 entlangströmt und so eine gute Kühlung erfährt. Aufgrund des meist großen Temperaturgradienten zwischen dem Gehäuse 16 beziehungsweise dem Kühlelement 32 und der Umgebungsluft wird die vom Gas aufgenommene Wärme über die Kühlrippen nach außen abgeführt. Die Kühlrippen 34 sind dabei vorzugsweise aus einem Material ausgebildet, das eine hohe thermische Leitfähigkeit aufweist, um die thermische Energie des Gases gut ableiten zu können und das Gas somit wirkungsvoll abzukühlen. Beispielsweise ist das Kühlelement 32, beziehungsweise die Kühlrippen 34, aus Stahl ausgebildet.

Alternativ oder zusätzlich kann das Kühlelement 32 beispielsweise auch einen statischen Mischer umfassen. Dieser kann dazu dienen, den Gasstrom zu verwirbeln, so dass das Gas ein möglichst hohes Maß an thermischer Energie abgeben kann.

Zusätzlich zu dem Eingang 18 kann ein weiterer Eingang 30 vorgesehen sein, der gleichermaßen wie der Eingang 18 ausgestaltet ist und die Analysekammer 14 ebenfalls mit der Gasleitung 12 fluidisch verbindet. Dabei kann der Eingang 30 beziehungsweise der Weg von dem Eingang 30 zu der Analysekammer 14 vergleichbar mit dem Eingang 18 gestaltet sein, insbesondere mit Bezug auf das Vorsehen des wenigstens einen Kühlelements 32. Eine Mehrzahl von Eingängen ist insbesondere bei einem in die Gasleitung 12 einschraubbaren Gehäuse 16 vorteilhaft. Hier kann, beispielsweise bei einer rotationssymmetrischen Anordnung der Eingänge, unabhängig von der Einbauposition stets eine geeignete Ausrichtung eines Eingangs 18, 30 realisiert werden.

Es ist ferner möglich, insbesondere innerhalb des Gehäuse 16 Komponenten, wie etwa Prallbleche, Kanten, Rundungen oder Ähnliches einzufügen, um dadurch die Strömungsgeschwindigkeit des Gases in dem Gehäuse 16 gezielt zu beeinflussen. Dadurch kann die Ansprechzeitz des Sensors auf Veränderungen im Abgas optimiert werden.

Die Figuren 2 bis 7 zeigen weitere Ausführungsbeispiele der erfindungsgemäßen Anordnung 10, die der Anordnung 10 gemäß Figur 1 in weiten Teilen entsprechen. Nachfolgend werden daher funktionell und/oder strukturell ähnliche oder vergleichbare Elemente mit denselben Bezugszeichen bezeichnet, ohne dass in jedem Fall ihres Auftretens eine detaillierte Beschreibung erfolgt oder wiederholt wird.

Gemäß Figur 2 ist das wenigstens eine Kühlelement 32 als eine thermische Masse 36 ausgebildet. Das Kühlelement 32 umfasst daher ein Bauteil mit einer großen Wärmekapazität, vorzugsweise in einem Bereich von ≥ 0,3J/gK bis ≤ 1,5J/gK. Die thermische Masse 36 kann dabei beispielsweise den Eingangskanal 38 zumindest teilweise begrenzen, der zwischen dem Eingang 18 und der Analysekammer 14 angeordnet ist. Dadurch strömt das zu analysierende Gas vor dem Eintritt in die Analysekammer 14 an der thermischen Masse 36 entlang und gibt so seine thermische Energie an die thermische Masse 36 ab. Die thermische Masse 36 kann beispielsweise ausgebildet sein aus Aluminium oder Edelstahllegierungen mit Wärmekapazitäten ≥ 0,5J/gK, wie beispielsweise Outokumpu SAF 2507.

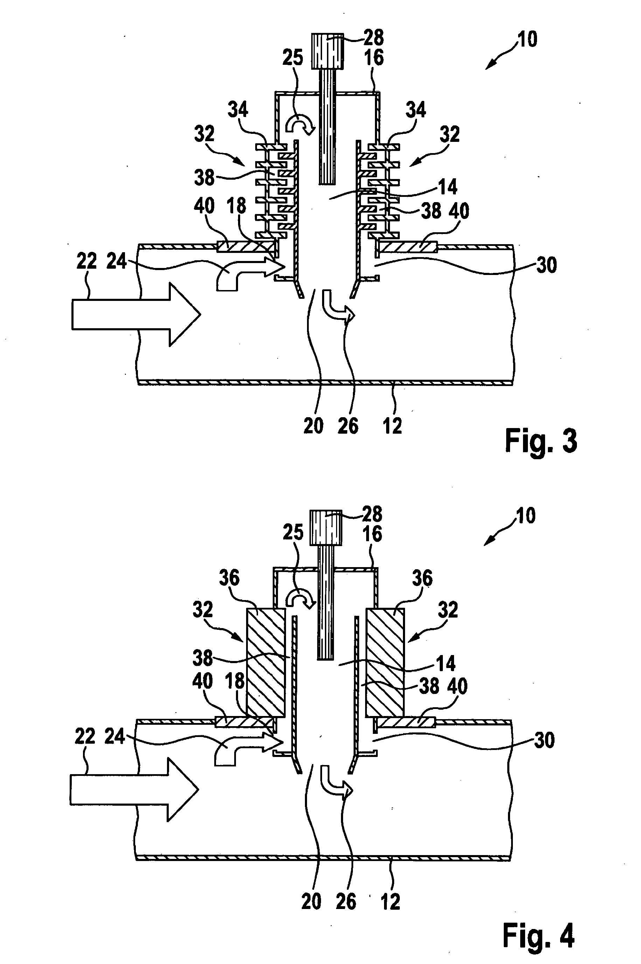

Gemäß Figur 3 sind das Gehäuse 16 und die Gasleitung 12 zumindest teilweise thermisch von einander entkoppelt. Dazu ist eine thermische Entkopplung 40 vorgesehen, die zwischen dem Gehäuse 16 und der Gasleitung 12 angeordnet ist. Dadurch wird verhindert, dass das Gehäuse 16 und die Gasleitung 12 in direktem insbesondere thermischen Kontakt miteinander stehen. Die Wärme beziehungsweise die thermische Energie, welche die Gasleitung 12 durch das Leiten des heißen Abgases aufweist, kann so nicht, oder zumindest nicht direkt und nur teilweise, an das Gehäuse 16 abgegeben werden. Auf diese Weise bleibt das Gehäuse 16 verglichen mit der Gasleitung 12 bei einer niedrigeren Temperatur, so dass ein Kühlen des Gases effektiver möglich ist. Denn der Temperaturgradient zwischen Abgas und Umgebungsluft wird so nicht beeinträchtigt. Die thermische Entkopplung 40 kann dabei als ein Material mit geringer thermischer Leitfähigkeit, beziehungsweise als ein thermischer Isolator ausgebildet sein. Vorteilhafte Wärmeleitfähigkeiten können hier in einem Bereich von ≤ 4W/mK liegen. Beispielhafte Materialien, die für eine thermische Entkopplung 40 geeignet sind, umfassen Stahllegierungen mit Wärmeleitfähigkeiten ≤ 4W/mK, beispielsweise Assab Steels Calmax, oder Keramiken mit geringen Wärmeleitfähigkeiten von vorzugsweise ≤ 4W/mK und gleichzeitig hohem Wärmeausdehnungskoeffizienten, die angepasst sein können an den Wärmeausdehnungskoeffizienten der Gasleitung, wie etwa Zirkoniumdioxid (ZrO₂).

Eine Ausführungsform, in welcher eine thermische Entkopplung in Kombination mit einer thermischen Masse 36 als Kühlelement 32 kombiniert ist, ist in Figur 4 gezeigt.

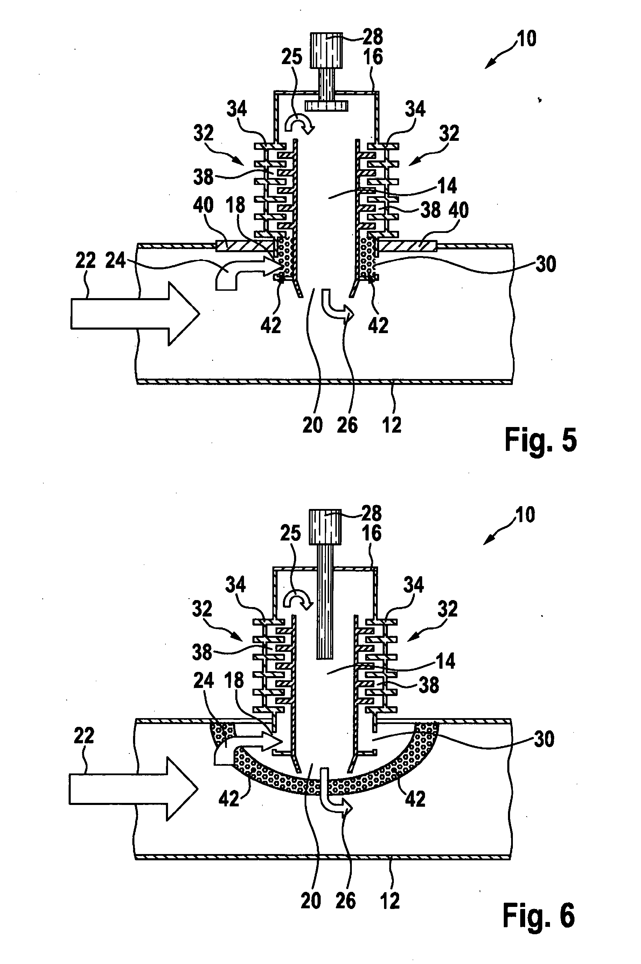

Gemäß Figur 5 ist eine katalytisch aktive Substanz 42 vorgesehen, die derart angeordnet ist, dass das Gas sie vor dem Erreichen des Sensors 28 durchströmt. Dazu kann die katalytisch aktive Substanz 42 beispielsweise in dem Eingang 18 oder in dem Eingangskanal 38 vorgesehen sein, wo sie beispielsweise den entsprechenden Wandbereich bekleidet. Es ist ferner möglich, die katalytisch aktive Substanz propfenartig in dem Eingang 18 anzuordnen, wobei der Propfen dann für das zu analysierende Gas durchlässig ist. Durch die katalytisch aktive Substanz 42 kann die Zusammensetzung des Abgases gezielt verändert werden, indem die zur Detektion nicht relevanten Abgasbestandteile, wie etwa wasserstoffhaltige Gasbestandteile, oxidiert und damit entfernt werden. Hierzu kann als katalytisch aktive Substanz beispielsweise verwendet ein oberflächenreiches Oxid, wie beispielsweise Aluminiumdioxid (Al₂O₃), Cerdioxid (CeO₂), Zirkondioxid (ZrO₂); ein Edelmetall, wie etwa Platin (Pt), Palladium (Pd), oder Iridium (Ir); oder Mischungen daraus. Derartige Substanzen sind zweckmäßigerweise katalytisch aktiv für insbesondere wasserstoffhaltige Gase. Für den Fall, dass trotzt des Vorsehens einer katalytisch aktiven Substanz 42 eine Änderung der Abgaszusammensetzung eintritt, kann anhand der aktuellen Temperatur- und Sensordaten sowie anhand eines zuvor ermittelten Modells auf die tatsächlich im Abgas vorliegende Gaskonzentration beziehungsweise Mischung geschlossen werden.

Darüber hinaus ist zu erkennen, dass der Sensor 28 nicht stabförmig ausgebildet ist, sondern an dem Bereich der Rückwand des Gehäuses 16 angeordnet ist. Auf diese Weise wird der Abstand zwischen dem Sensor 28 und der Gasleitung 12 maximal gehalten, was eine Erhitzung des Sensors 28 durch eventuelle Wärmestrahlung weiter minimiert.

Gemäß Figur 6 ist die katalytisch aktive Substanz 42 als Verschlusskappe ausgebildet ist, die den Eingang 18 und optional den Eingang 30, sowie den Ausgang 20 des Gehäuses 16 in der Gasleitung 12 umgibt. Dazu kann die katalytisch aktive Substanz 42 beispielsweise halbkreisförmig ausgebildet sein. Dabei ist es zweckmäßig, dass die katalytisch aktive Substanz 42 für das zu analysierende Gas durchlässig ist. Auf diese Weise kann ausgenutzt werden, dass der heiße Gasstrom, der im Inneren der Gasleitung 12 fließt, das katalytisch aktive Material erhitzt. Diese hohen Temperaturen begünstigen den Gasumsatz am Katalysator, während die Gasanalyse am Sensor 28 wie gewünscht bei niedrigen Temperaturen erfolgt. Die katalytisch aktive Substanz 42 kann dabei ferner als Hitzeschild dienen, um das Gehäuse 16 nicht zu stark zu erhitzen.

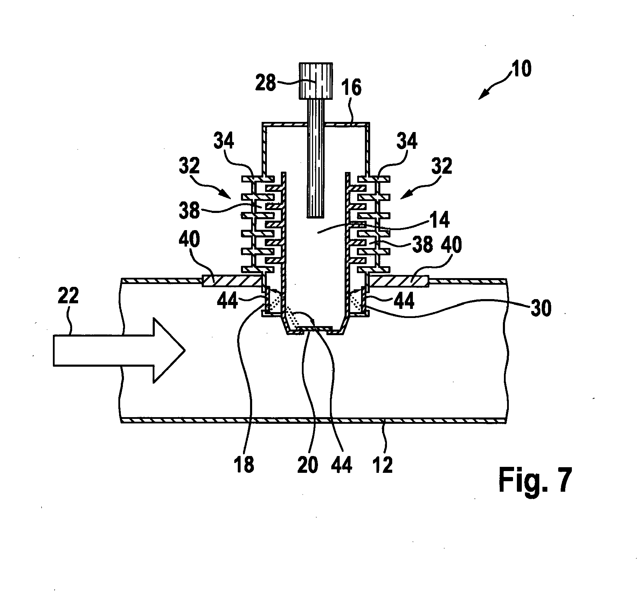

Zusätzlich oder alternativ kann zumindest der Eingang 18 und gegebenenfalls der Eingang 30 durch eine Verschlusseinrichtung 44, wie etwa eine mechanische Klappe, verschließbar sein, wie dies in Figur 7 gezeigt ist. Zusätzlich kann auch der Ausgang 20 durch eine Verschlusseinrichtung 44 verschließbar sein. Dadurch kann bei einer erhöhten Temperatur des Gases in der Gasleitung 12 der Zugang zu der Analysekammer 14 und damit zu dem Sensor 28 verschlossen werden, wodurch der Sensor 28 vor zu hohen Temperaturen, wie sie etwa in Form von Temperaturspitzen vorkommen, geschützt wird. Derartige Temperaturspitzen kommen beispielsweise bei einer Regenerierung eines weiteren Sensors oder eines Partikelfilters vor, da hier Temperaturen verwendet werden, die weit über der Betriebstemperatur des Sensors 28 liegen können. Beispielsweise werden hier Temperaturen in einem Bereich von 1000°C oder darüber erreicht.

Dazu ist es zweckmäßig, dass die Verschlusseinrichtung 44 mit einer Steuereinrichtung verbunden ist, die die Verschlusseinrichtung 44 in Abhängigkeit der Temperatur des Gasstroms und/oder eines Regenerierungsvorgangs schließt beziehungsweise öffnet. Dabei können beispielsweise Informationen aus den Kennfelddaten des Verbrennungsmotors, Daten von Temperatursonden oder die Daten des Sensors 28 selbst genutzt werden, um Abgasspitzentemperaturen zu errechnen und daraufhin die Verschlusseinrichtung 44 zu verschließen beziehungsweise zu öffnen. Ebenso kann beispielsweise das Startsignal zur Regenerierung, insbesondere eines Partikelfilters, genutzt werden, um synchron dazu den Sensor 28 für die Dauer der Regenerierung vor den dabei auftretenden hohen Abgastemperaturen beziehungsweise Temperaturspitzen zu schützen, indem dieser durch das Verschließen der Verschlusseinrichtung 44 von dem Abgasstrom entkoppelt wird.

Es ist für den Fachmann ersichtlich, dass auch Kombinationen aus den beschriebenen Merkmalen wie gewünscht möglich sind. So ist eine erfindungsgemäße Anordnung bei jeder Ausführungsform des Sensors 28 beispielsweise möglich sowohl mit einer thermischen Masse 36, als auch mit Kühlrippen 34 als Kühlelement 32 und zwar in Kombination mit oder ohne eine thermische Entkopplung 40, mit oder ohne eine katalytisch aktive Substanz 42 ohne den Rahmen der Erfindung wie in den beigefügten Ansprüchen definiert zu verlassen.

## Patentansprüche

1. Sensoranordnung; insbesondere zum Detektieren von Gasemissionen in dem Abgas eines Kraftfahrzeugs mit einem Verbrennungsmotor, umfassend eine Gasleitung (12) und eine durch ein Gehäuse (16) begrenzte und mit dem Inneren der Gasleitung (12) durch einen Eingang (18) und einen Ausgang (20) fluidisch verbundene Analysekammer (14), wobei die Analysekammer (14) zumindest teilweise außerhalb der Gasleitung (12) angeordnet ist und wobei in der Analysekammer (14) ein Sensor (28) angeordnet ist derart, dass er sich außerhalb der Gasleitung (12) befindet, wobei, wenigstens ein Kühlelement (32) vorgesehen ist, das in einem Bereich zwischen der Gasleitung (12) und dem Sensor (28) angeordnet ist, **dadurch gekennzeichnet, dass** zumindest der Eingang (18) durch eine Verschlusseinrichtung (44) verschließbar ist, und wobei die Verschlusseinrichtung (44) mit einer Steuereinrichtung verbunden ist, die durch die Verschlusseinrichtung (44) bei einer vorbestimmten Temperatur des Gasstroms den Eingang schließt oder öffnet.

2. Sensoranordnung nach Anspruch 1, **dadurch gekennzeichnet, dass** eine Mehrzahl von Kühlelementen (32) vorgesehen sind, die als Kühlrippen (34) ausgestaltet sind.

3. Sensoranordnung nach Anspruch 1, **dadurch gekennzeichnet, dass** wenigstens ein Kühlelement (32) als eine thermische Masse (36) ausgebildet ist.

4. Sensoranordnung nach einem der Ansprüche 1 bis 3, **dadurch gekennzeichnet, dass** in dem wenigstens einen Kühlelement (32) wenigstens ein Kühlkanal für eine externe Kühlung des Kühlelements (32) mit einem Kühlfluid vorgesehen ist.

5. Sensoranordnung; nach einem der Ansprüche 1 bis 4, **dadurch gekennzeichnet, dass** das Gehäuse (16) und die Gasleitung (12) zumindest teilweise thermisch von einander entkoppelt sind.

6. Sensoranordnung nach einem der Ansprüche 1 bis 5, **dadurch gekennzeichnet, dass** der Sensor (28) als chemosensitiver Feldeffekttransistor ausgebildet ist.

7. Sensoranordnung nach einem der Ansprüche 1 bis 6, **dadurch gekennzeichnet, dass** eine katalytisch aktive Substanz (42) vorgesehen ist, die derart angeordnet ist, dass das Gas sie vor dem Erreichen des Sensors (28) durchströmt und/oder an ihr entlangströmt.

8. Verwendung einer Sensoranordnung nach einem der Ansprüche 1 bis 7, in dem Abgasstrang eines Fahrzeugs mit einem Verbrennungsmotor.

## Claims

1. Sensor arrangement, in particular for detecting gas emissions in the exhaust gas of a motor vehicle having an internal combustion engine, comprising a gas line (12) and an analysis chamber (14) which is bounded by a housing (16) and is fluidically connected to the interior of the gas line (12) by an inlet (18) and an outlet (20), wherein the analysis chamber (14) is at least partially arranged outside the gas line (12), and wherein a sensor (28) is arranged in the analysis chamber (14) in such a way that it is located outside the gas line (12), wherein at least one cooling element (32) is provided which is arranged in a region between the gas line (12) and the sensor (28), **characterized in that** at least the inlet (18) can be closed off by a closure device (44), and wherein the closure device (44) is connected to a control device which closes or opens the inlet by means of the closure device (44) at a predetermined temperature of the gas stream.

2. Sensor arrangement according to Claim 1, **characterized in that** a multiplicity of cooling elements (32) are provided, which are configured as cooling fins (34).

3. Sensor arrangement according to Claim 1, **characterized in that** at least one cooling element (32) is embodied as a thermal mass (36).

4. Sensor arrangement according to one of Claims 1 to 3, **characterized in that** at least one cooling duct for external cooling of the cooling element (32) is provided with a cooling fluid in the at least one cooling element (32).

5. Sensor arrangement according to one of Claims 1 to 4, **characterized in that** the housing (16) and the gas line (12) are at least partially thermally isolated from one another.

6. Sensor arrangement according to one of Claims 1 to 5, **characterized in that** the sensor (28) is embodied as a chemo-sensitive field-effect transistor.

7. Sensor arrangement according to one of Claims 1 to 6, **characterized in that** a catalytically active substance (42) is provided which is arranged in such a way that the gas flows through it and/or along it, before reaching the sensor (28).

8. Use of a sensor arrangement according to one of Claims 1 to 7, in the exhaust section of a vehicle having an internal combustion engine.

## Revendications

1. Agencement capteur, notamment pour détecter des émissions gazeuses dans le gaz d'échappement d'un véhicule automobile équipé d'un moteur à combustion interne, comprenant un conduit de gaz (12) et une chambre d'analyse (14) délimitée par un carter (16) et reliée sur le plan fluide à l'intérieur du conduit de gaz (12) par une entrée (18) et une sortie (20), la chambre d'analyse (14) étant disposée au moins en partie à l'extérieur du conduit de gaz (12) et un capteur (28) étant disposé dans la chambre d'analyse (14) de façon à se trouver à l'extérieur du conduit de gaz (12), au moins un élément de refroidissement (32) étant prévu et disposé dans une zone située entre le conduit de gaz (12) et le capteur (28), **caractérisé en ce qu'**au moins l'entrée (18) peut être fermée par un dispositif de fermeture (44) et le dispositif de fermeture (44) étant relié à un dispositif de commande fermant ou ouvrant l'entrée par le biais du dispositif de fermeture (44) en présence d'une température prédéfinie du flux de gaz.

2. Agencement capteur selon la revendication 1, **caractérisé en ce qu'**une pluralité d'éléments de refroidissement (32) sont prévus, ces éléments prenant la forme de nervures de refroidissement (34).

3. Agencement capteur selon la revendication 1, **caractérisé en ce qu'**au moins un élément de refroidissement (32) prend la forme d'une masse thermique (36).

4. Agencement capteur selon l'une quelconque des revendications 1 à 3, **caractérisé en ce qu'**au moins un canal de refroidissement servant à un refroidissement externe de l'élément de refroidissement (32) au moyen d'un fluide de refroidissement est prévu dans l'au moins un élément de refroidissement (32).

5. Agencement capteur selon l'une quelconque des revendications 1 à 4, **caractérisé en ce que** le carter (16) et le conduit de gaz (12) sont découplés au moins en partie thermiquement l'un de l'autre.

6. Agencement capteur selon l'une quelconque des revendications 1 à 5, **caractérisé en ce que** le capteur (28) prend la forme d'un transistor à effet de champ chimiosensible.

7. Agencement capteur selon l'une quelconque des revendications 1 à 6, **caractérisé en ce qu'**une substance active (42) catalytique est prévue, ladite substance étant disposée de telle sorte que le gaz la traverse et/ou la longe avant d'atteindre le capteur (28).

8. Utilisation d'un agencement capteur selon l'une quelconque des revendications 1 à 7, dans la chaîne d'évacuation des gaz d'échappement d'un véhicule doté d'un moteur à combustion interne.
